# EUROPÄISCHE PATENTSCHRIFT

(11) **EP 1 903 251 B1**
(45) Veröffentlichungstag und Bekanntmachung des Hinweises auf die Patenterteilung: **28.09.2016**
(21) Anmeldenummer: 07016977.6
(22) Anmeldetag: 30.08.2007
(51) Int. Cl.: F16F 9/02

(54) **Verstelleinrichtung**
Displacement device
Dispositif de réglage

(30) Priorität: 19.09.2006 DE 102006044608; 22.05.2007 DE 102007024104
(43) Veröffentlichungstag der Anmeldung: 26.03.2008
(73) Patentinhaber: Stabilus GmbH, 56070 Koblenz (DE)
(72) Erfinder: Görgen, Andreas, 56072 Koblenz (DE); Frye, Hartwig, 56218 Mühlheim-Kärlich (DE)

(56) Entgegenhaltungen:
- DE-U1- 29 521 309
- US-A1- 2002 017 748
- US-A1- 2005 156 366

## Beschreibung

Die Erfindung bezieht sich auf eine Verstelleinrichtung zum Verstellen eines Bauteils nach dem Oberbegriff des Anspruchs 1.

Aus der US 2005/0156366 A1 ist eine Verstelleinrichtung bekannt, bei der bei nicht belasteter Verstelleinrichtung die Kolbenstange mit dem Kolben frei aus dem Zylinder ausfahren kann, während in Einschubrichtung eine Blockierung erfolgt, die durch eine manuelle Öffnung des Verbindungsventils aufgehoben wird, so daß unter Einschubbelastung der Kolbenstange diese zu einer gewünschten Position einschiebbar ist.

Aus der DE 295 21 309 U1 ist eine Verstelleinrichtung bekannt, bei der bei belasteter Verstelleinrichtung die Kolbenstange mit dem Kolben frei in den Zylinder einfahren kann, während in Ausschubrichtung eine Blockierung erfolgt, die durch eine manuelle Öffnung des Verbindungsventils aufgehoben wird, so daß unter Ausschubbelastung der Kolbenstange diese zu einer gewünschten Position einschiebbar ist. Ferner ist in bestimmten Bereichen der Zylinderinnenwand eine Axialnut ausgebildet, mit der die Blockierung in Ausschubrichtung in diesen Bereichen aufgehoben ist.

Aufgabe der Erfindung ist es eine Verstelleinrichtung der eingangs genannten Art zu schaffen, die bei einfachem Aufbau ein Ausschieben von Kolben und Kolbenstange mit einer geringen Ausschubgeschwindigkeit ermöglicht.

Diese Aufgabe wird erfindungsgemäß dadurch gelöst, daß die Verbindung zwischen Ventil und erster Zylinderkammer eine in die Ventilöffnung mündende Öffnung besitzt, die von dem Ventilglied in seiner die Ventilöffnung schließenden Schließstellung ganz verschlossen oder zur ersten Zylinderkammer teilgeöffnet und in seiner die Ventilöffnung öffnenden Öffnungsstellung geöffnet ist.

Durch die Strömungsdrossel sind Ausschubgeschwindigkeiten in der Größenordnung von < 10 mm/s insbesondere auch von < 1 mm/s möglich.

Damit ist eine Verwendung zur Neigungseinstellung der Lehne eines Stuhles, insbesondere der Lehne der Sitze in einem Bus möglich. Die Fahrgäste können so während der Reise individuell die Neigung ihrer schwenkbaren Sitzlehne einstellen. Bei kurzzeitigem Verlassen des Sitzes erfolgt keine merkbare Verstellung.

Werden die Sitze aber für längere Zeit wie z.B. fünfzehn Minuten nicht benutzt, so werden alle Sitzlehnen selbsttätig einheitlich in ihre Ausgangsstellung verstellt.

In einfacher Ausbildung kann das Ventil eine an der radial umlaufenden Mantelfläche des Kolbens und mit der ersten Zylinderkammer verbundene, radial umlaufende Nut aufweisen, in der ein Dichtring geringerer axialer Erstreckung als der Nut zwischen einer der der ersten Zylinderkammer näheren ersten Nutseitenwand und einer der zweiten Zylinderkammer näheren zweiten Nutseitenwand axial bewegbar angeordnet sein, der mit seinem Außenumfang dichtend an der Innenwand des Zylinders in Anlage ist, wobei im Kolben ein von der Nut zur ersten Zylinderkammer führender die Strömungsdrossel aufweisender Verbindungskanal angeordnet ist.

Dabei ist der Dichtring in Doppelfunktion sowohl Ventilglied des Ventils als auch Dichtelement zum Trennen der ersten und zweiten Zylinderkammer voneinander.

Zum Schließen des Verbindungsventils kann in der zylindrischen Wand der Verbindungsöffnung eine radial umlaufende Ringnut angeordnet sein, in der ein Dichtring eingesetzt ist, wobei der Ventilstift im Bereich der Ventilkammer einen gegenüber der Ventilkammer reduzierten Durchmesser aufweist und an seinem in die Ventilöffnung ragenden Bereich einen etwa dem Innendurchmesser des Dichtrings entsprechenden Durchmesser aufweist, an dem in der Schließstellung des Ventilstifts der Dichtring einen Ventildurchgang absperrend in Anlage ist und wobei in der Öffnungsstellung des Ventilstifts sich der Bereich reduzierten Durchmessers im Bereich des Dichtrings befindet, so daß der Dichtring unterströmbar ist.

In einfacher Weise ist die Strömungsdrossel dadurch montierbar, daß eine in dem Kolben koaxial fest angeordnete Ringscheibe die Nutseitenwand auf der der Ventilkammer abgewandten Seite der Ringnut bildet, wobei in oder an der Ringscheibe die Strömungsdrossel angeordnet ist.

Damit ist es bei sonst gleichem Aufbau der Verstelleinrichtung leicht möglich je nach der gewünschten Ausfahrgeschwindigkeit eine Ringscheibe mit entsprechender Strömungsdrossel zu verwenden.

Dabei kann in der Ringscheibe ein axial durchgehender Axialdurchlaß mit einem Drosselquerschriitt ausgebildet sein, der eine axial durchgehende Ausnehmung sein kann, dessen Querschnitt den Drosselquerschnitt bildet.

Der Drosselquerschnitt kann aber auch dadurch gebildet sein, daß in dem Axialdurchlaß ein poröses Bauteil angeordnet ist.

Eine andere einfach aufgebaute Ausbildung besteht darin, daß die Ringscheibe ein poröses Bauteil ist, wobei das poröse Bauteil beispielsweise ein Sinterbauteil oder ein PU-Schaumbauteil sein kann.

In oder an der Ringscheibe können eine oder mehrere zumindest einen Teil des Verbindungskanals bildende Radialverbindungen ausgebildet sind, die radial in die Ventilöffnung münden, wobei die Radialverbindungen Radialnuten sein können, die an ihrer dem Dichtring zugewandten Seite offen sind.

Eine weitere Möglichkeit zur Ausbildung der Strömungsdrossel besteht darin, daß die ersten Radialverbindungen die Strömungsdrossel bilden.

Die Strömungsdrossel kann auch dadurch gebildet sein, daß der Ventilstift an seinem der ersten Zylinderkammer zugewandten Endbereich eine radiale Erweiterung aufweist, die in der Schließstellung des Ventilstifts an der Ringscheibe axial in Anlage ist, wobei bei axial an der Ringscheibe anliegender radialer Erweiterung zwischen der radialen Erweiterung des Ventilstifts und der der ersten Zylinderkammer zugewandten Seitenwand der Ringscheibe die Strömungsdrossel gebildet ist.

Diese Ausbildung hat den Vorteil, daß der Drosselquerschnitt bei geöffnetem Verbindungsventil auch offen ist, so daß sich keine die Strömungsdrossel verstopfenden Verunreinigungen festsetzen können. Dies ermöglicht es die Strömungsdrossel mit besonders geringem Querschnitt auszubilden ohne Gefahr zu laufen, daß es zu einem Verstopfen der Strömungsdrossel kommt.

In einer Ausgestaltung können an der der ersten Zylinderkammer zugewandten Seitenwand der Ringscheibe und/oder an der der Ringscheibe zugewandten Seite der radialen Erweiterung eine oder mehrere die Strömungsdrossel bildende zweite Radialverbindungen ausgebildet sein, wobei vorzugsweise die zweiten Radialverbindungen zweite Radialnuten sind, die an ihrer der ersten Zylinderkammer zugewandten Seite offen sind.

Eine weitere Ausgestaltung besteht darin, daß die zweiten Radialverbindungen durch Oberflächenrauhigkeit auf der der ersten Zylinderkammer zugewandten Seite der Ringscheibe gebildet sind.

Es ist aber auch möglich, daß die zweiten Radialverbindungen durch ein auf der der ersten Zylinderkammer zugewandten Seite der Ringscheibe ausgebildetes Prägemuster gebildet sind.

Bei einer weiteren erfindungsgemäßen Ausführungsform weist der Kolben eine Topfausnehmung auf, in der eine Haltevorrichtung eingesetzt ist, die eine Scheibe in ihrer Einbauposition hält, wobei die Scheibe die Strömungsdrossel bildet.

Eine weitere Ausgestaltung besteht darin, daß die Haltevorrichtung eine axiale Bohrung, einen Bereich mit geringerem Außendurchmesser und einen Bereich mit größerem Außendurchmesser aufweist, wobei sich durch den Bereich mit geringerem Außendurchmesser eine radiale Bohrung vom Außenumfang der Haltevorrichtung zur Bohrung aufweist.

Um eine funktionssicherere Drosseleinrichtung zu erhalten können an beiden Stirnseiten der Scheibe separate oder angeformte Dichteinrichtungen angeordnet sein.

Die Dichteinrichtungen dichten wenigstens teilweise die Stirnseiten der Scheibe gasdicht ab, vorzugsweise in den Bereichen, wo die Scheibe am Stufengrund der großen Stufe und an der Haltevorrichtung anliegt, damit ein definierter Weg des Gases durch die Scheibe hindurch bereitgestellt wird.

Vorzugsweise dichten die Dichteinrichtungen die Stirnseiten der Scheibe in den Bereichen gasdicht ab, wo die Scheibe in der Topfausnehmung am Stufengrund der großen Stufe und an der Haltevorrichtung anliegt.

Ausführungsbeispiele der Erfindung sind in der Zeichnung dargestellt und werden im folgenden näher beschrieben. Es zeigen
- Figur 1: eine Schnittdarstellung eines ersten Ausführungsbeispiels des Kolbenbereichs einer Verstelleinrichtung
- Figur 2: einen Halbschnitt des Kolbenbauteils der Verstelleinrichtung nach Figur 1
- Figur 3: einen vergrößerten Ausschnitt des Kolbenbauteils nach Figur 2
- Figur 4: einen vergrößerten Halbschnitt eines Ausschnitts des Kolbenbereichs nach Figur 1 bei geöffnetem Ventil und geschlossenem Verbindungsventil
- Figur 5: einen vergrößerten Halbschnitt eines Ausschnitts des Kolbenbereichs bei geöffnetem Ventil und Verbindungsventil
- Figur 6: einen vergrößerten Halbschnitt eines Ausschnitts des Kolbenbereichs nach Figur 1 bei geschlossenem Ventil und Verbindungsventil
- Figur 7: einen vergrößerten Halbschnitt eines Ausschnitts des Kolbenbereichs nach Figur 1 bei geschlossenem Ventil und geöffnetem Verbindungsventil
- Figur 8: einen vergrößerten Halbschnitt eines Ausschnitts des Kolbenbereichs eines zweiten Ausführungsbeispiels einer Verstelleinrichtung
- Figur 9: einen vergrößerten Halbschnitt eines Ausschnitts des Kolbenbereichs eines dritten Ausführungsbeispiels einer Verstelleinrichtung
- Figur 10: eine Ansicht der zur ersten Zylinderkammer gerichteten Seite einer Ringscheibe der Verstelleinrichtung nach Figur 8
- Figur 11: eine Ansicht der zur ersten Zylinderkammer gerichteten Seite einer Ringscheibe der Verstelleinrichtung nach Figur 1
- Figur 12: eine Ansicht der zu ersten Zylinderkammer gerichteten Seite eines zweiten Ausführungsbeispiels einer Ringscheibe für eine Verstelleinrichtung nach Figur 1
- Figur 13: eine Ansicht der der ersten Zylinderkammer abgewandten Seite eines dritten Ausführungsbeispiels einer Ringscheibe für eine Verstelleinrichtung nach Figur 1
- Figur 14: einen Querschnitt der Ringscheibe nach Figur 13
- Figur 15: ein ersten Ausführungsbeispiel einer Radialverbindung auf der der ersten Zylinderkammer zugewandten Seite der Ringscheibe nach Figur 13
- Figur 16: ein zweites Ausführungsbeispiel einer Radialverbindung auf der der ersten Zylinderkammer zugewandten Seite der Ringscheibe nach Figur 13
- Figur 17: eine Schnittdarstellung eines weiteren Ausführungsbeispiels des Kolbenbereichs einer Verstelleinrichtung
- Figur 18: eine Schnittdarstellung eines weiteren Ausführungsbeispiels des Kolbenbereichs einer Verstelleinrichtung.

Die in den Figuren dargestellten Verstelleinrichtungen weisen eine Gasfeder mit einem Zylinder 1 auf, in dem ein Kolben 2 axial verschiebbar angeordnet ist, der den mit einem unter Druck stehenden gasgefüllten Innenraum des Zylinders 1 in eine erste Zylinderkammer 3 und eine zweite Zylinderkammer 4 unterteilt.

Auf der Seite der ersten Zylinderkammer 3 ist der Zylinder 1 an seinem nicht dargestellten Ende geschlossen und kann mit dem einen der zu verstellenden Bauteile, z.B. einem feststehenden Bauteil eines Kraftfahrzeugs gelenkig verbunden werden.

Durch die zweite Zylinderkammer 3 ist eine mit ihrem einen Ende fest mit dem Kolben 2 verbundene Kolbenstange 5 koaxial hindurch und mittels einer nicht dargestellten Dicht- und Führungseinheit abgedichtet aus dem Zylinder 1 herausgeführt.

Das freie Ende der Kolbenstange 5 kann z.B. an einer zu verstellenden Sitzlehne des Kraftfahrzeugs angelenkt sein.

An der an der Innenwand des Zylinders 1 verschiebbar geführten zylindrischen Mantelfläche des Kolbens 2 ist eine radial umlaufende Nut 6 ausgebildet, in der ein an der Innenwand des Zylinders 1 dichtend anliegender Dichtring 7 angeordnet ist, der ein Ventilglied eines Ventils 14 bildet.

Da die axiale Erstreckung des Dichtrings 7 geringer ist als die axiale Erstreckung der Nut 6 ist der Dichtring 7 in der Nut 6 axial bewegbar.

Der Dichtring 7 ist an seiner dem Nutgrund 8 zugewandten Seite unterströmbar.

Von dem Nutgrund 8 aus führt ein im Kolben 2 ausgebildeter radialer Verbindungskanal 9 über ein axiales Verbindungskanalstück 10 in eine koaxiale topfartige zur ersten Zylinderkammer 3 hin offene stufige Topfausnehmung 11 im Kolben 2.

In die der ersten Zylinderkammer 3 nähere große Stufe 12 der Topfausnehmung 11 ist eine Ringscheibe 13 eingesetzt, die durch Verstemmung des Mündungsbereichs der Topfausnehmung 11 in die erste Zylinderkammer 3 in ihrer Einbauposition gehalten ist.

In dem Kolben 2 ist weiterhin eine koaxiale zylindrische Ventilkammer 15 eines Verbindungsventils 16 ausgebildet, in der ein Ventilstift 17 axial bewegbar angeordnet ist, der in seinem in der Schließstellung in der Ventilkammer 15 befindlichen Bereich 18 einen geringeren Durchmesser aufweist als die Ventilkammer 15.

Mit seinem der zweiten Zylinderkammer 4 zugewandten Endbereich ragt der Ventilstift 17 durch eine Dichtung 19 abgedichtet in eine durchgehende Koaxialbohrung 20 der rohrartig ausgebildeten Kolbenstange 5.

In der Koaxialbohrung 20 ist eine manuell verschiebbare Betätigungsstange 21 angeordnet, die mit ihrem einen Ende zur manuellen Beaufschlagung nach außen ragt.

Mit ihrem anderen Ende ist von der Betätigungsstange 21 der Ventilstift 17 in Richtung zur ersten Zylinderkammer 3 hin verschiebbar beaufschlagbar.

In dem Kolben 2 sind radiale Kanäle 22 ausgebildet, über die die zweite Zylinderkammer 4 mit der Ventilkammer 15 verbunden ist.

Eine koaxiale Ventilöffnung 23 verbindet die Ventilkammer 15 mit der Topfausnehmung 11.

Der Ventilstift 17 ragt mit seinem der ersten Zylinderkammer 3 zugewandten Endbereich 24 nicht reduzierten Durchmessers in den Bereich der Topfausnehmung 11.

Die Ringscheibe 13 bildet eine der ersten Zylinderkammer 3 nähere Nutseitenwand 26 einer durch die kleine Stufe 25 der Topfausnehmung 11 ausgebildete Ringnut 27, in der ein zweiter Dichtring 28 angeordnet ist.

Der zweite Dichtring 28 umschließt in der Schließstellung des Ventilstifts 17 mit seinem Innenumfang dicht den Endbereich des Ventilstifts 17, so daß der Ventildurchgang des Verbindungsventils 16 geschlossen ist.

In der Öffnungsstellung des Verbindungsventils 16 ist der Ventilstift 17 durch die Betätigungsstange 21 so weit in Richtung der ersten Zylinderkammer 3 verschoben, daß sich sein Bereich 18 reduzierten Durchmessers im Bereich des zweiten Dichtrings 28 und der Ringscheibe 13 befindet, so daß diese Teile radial innen unterströmbar sind.

Damit ist der Ventilsdurchgang des Verbindungsventils 16 geöffnet.

An dem freien Ende des Endbereichs 24 weist der Ventilstift 17 eine radiale Erweiterung 29 auf, die in der Schließstellung des Ventilstifts 17 an der Ringscheibe 13 axial in Anlage ist.

Die Ringscheibe 13 besitzt an ihrer der ersten Zylinderkammer 3 axial abgewandten Seite eine oder mehrere erste Radialnuten 30, durch die das Verbindungskanalstück 10 mit der Ventilöffnung 23 verbunden ist.

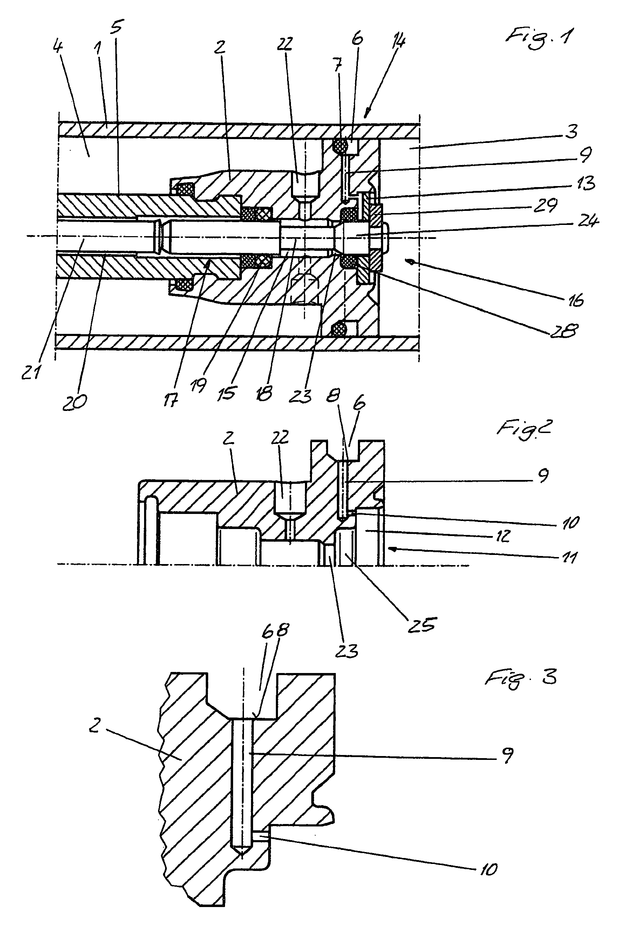

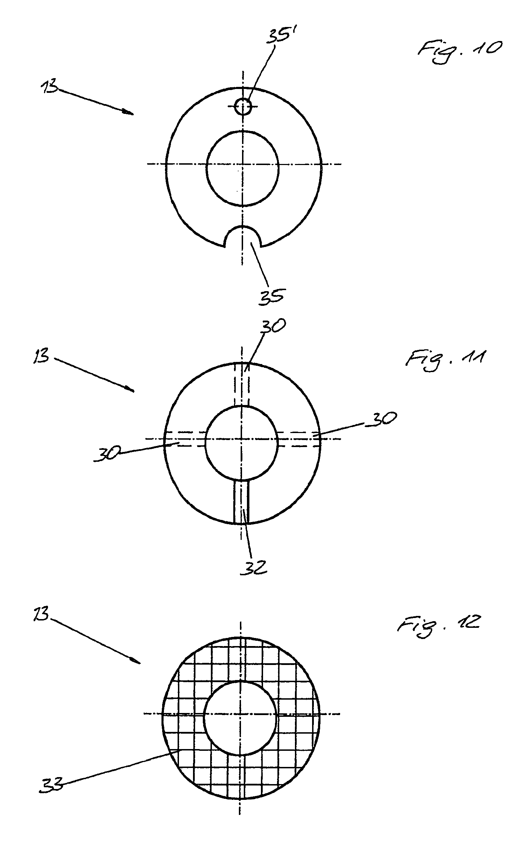

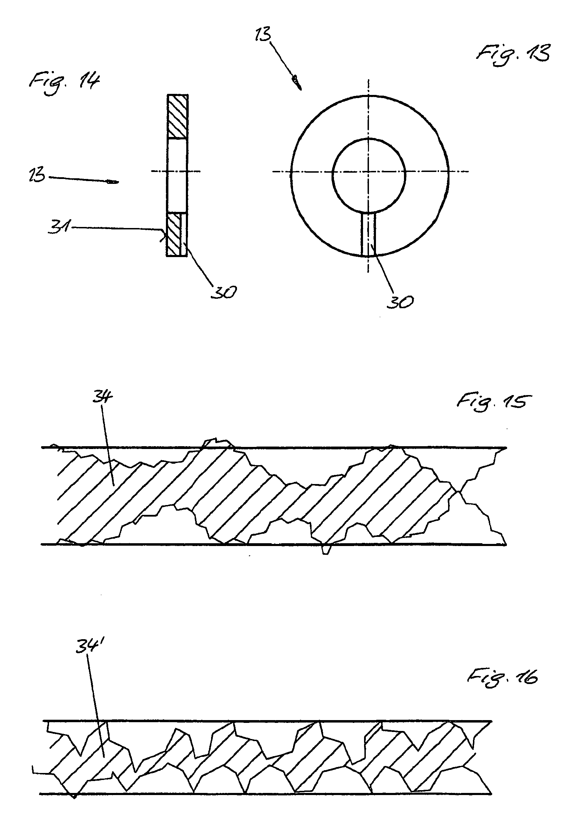

Bei dem Ausführungsbeispiel der Figuren 1 bis 7 ist die der ersten Zylinderkammer 3 zugewandte Seitenwand 31 der Ringscheibe 13 entweder gemäß Figur 11 mit einer zweiten Radialnut 32 oder gemäß Figur 12 mit einem Prägemuster 33 oder gemäß den Figuren 13 bis 16 mit einer Oberflächenrauhigkeit 34 größerer Rautiefe (Figur 15), oder einer Oberflächenrauhigkeit 34' geringerer Rautiefe versehen.

Dadurch wird bei an der Seitenwand 31 anliegender radialer Erweiterung 29 eine Strömungsdrossel zwischen diesen beiden Bauteilen gebildet.

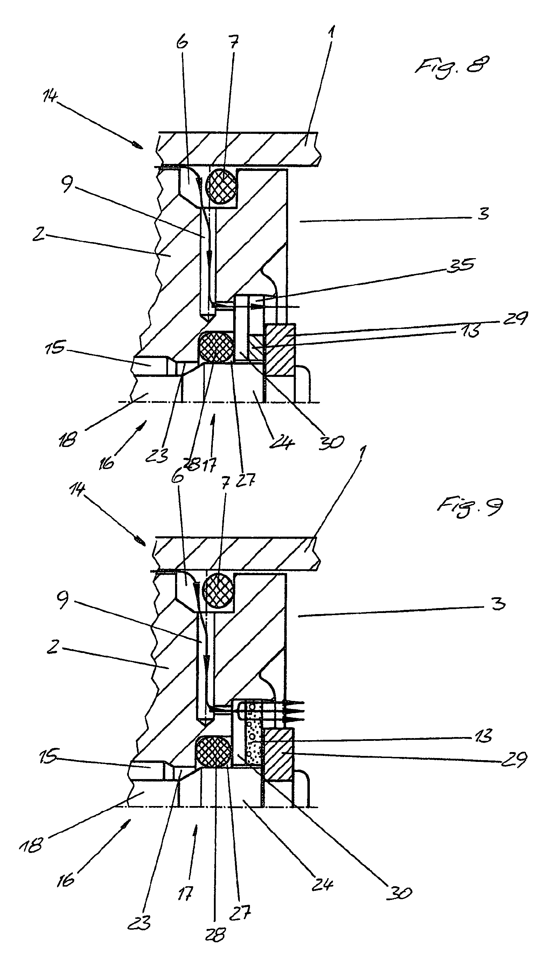

Bei den Ausführungsbeispielen der Figuren 8 bis 10 ist in der Ringscheibe 13 eine axial von den ersten Radialnuten 30 zur ersten Zylinderkammer 3 führende Strömungsdrossel angeordnet.

In den Figuren 8 und 10 besteht die Strömungsdrossel alternativ aus einer der axial durchgehenden Ausnehmungen 35 oder 35' in der Ringscheibe 13 die einen Drosselquerschnitt aufweisen.

Je nach Wunsch kann eine Ringscheibe 13 mit einer Ausnehmung 35 größeren Drosselquerschnitts oder mit einer Ausnehmung 35' geringeren Drosselquerschnitts benutzt werden.

In Figur 9 ist die Ringscheibe 13 als Sinterbauteil oder als ein PU-Schaumbauteil ausgebildet, dessen Porosität die Strömungsdrossel bildet.

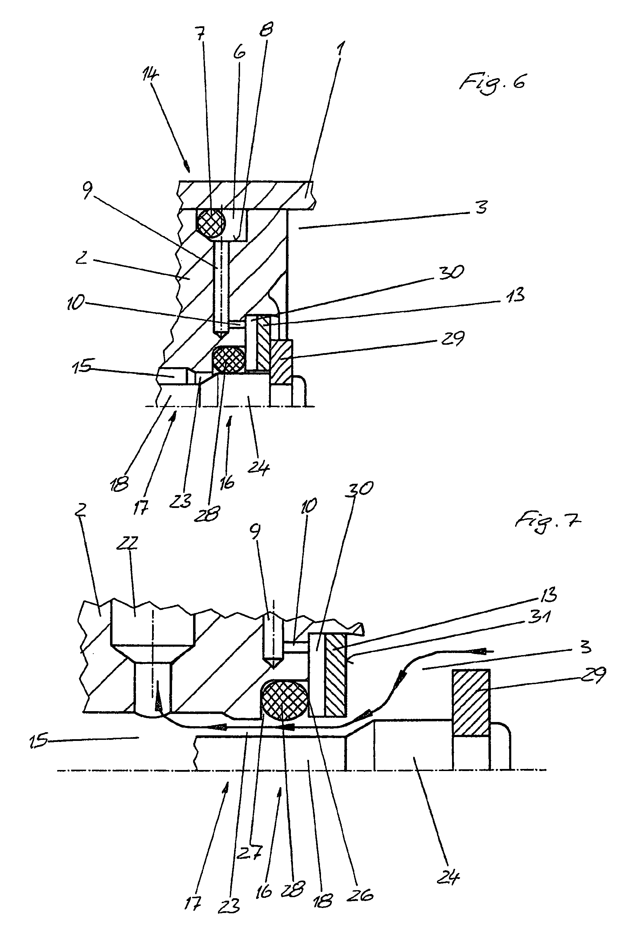

Bei in Einschubrichtung belasteter Kolbenstange 5 und geschlossenem Verbindungsventil 16 wird durch den höheren Druck in der ersten Zylinderkammer 3 gegenüber dem Druck in der zweiten Zylinderkammer 4 der Dichtring 7 in Anlage an die der zweiten Zylinderkammer 4 nähere Seitenwand der Nut 6 gepreßt und sperrt somit einen Durchgang von der ersten Zylinderkammer 3 zur zweiten Zylinderkammer 4 (Figuren 1 und 6). Die Verstelleinrichtung ist blockiert.

Ist die Kolbenstange 5 bei geschlossenem Verbindungsventil 16 nicht in Einschubrichtung belastet, herrscht ein ausgeglichener Druck in beiden Zylinderkammern 3 und 4. Die größere Fläche der der ersten Zylinderkammer 3 zugewandten Seite des Kolbens 2 führt aber zu einer Ausschubbewegung von Kolben 2 und Kolbenstange 5.

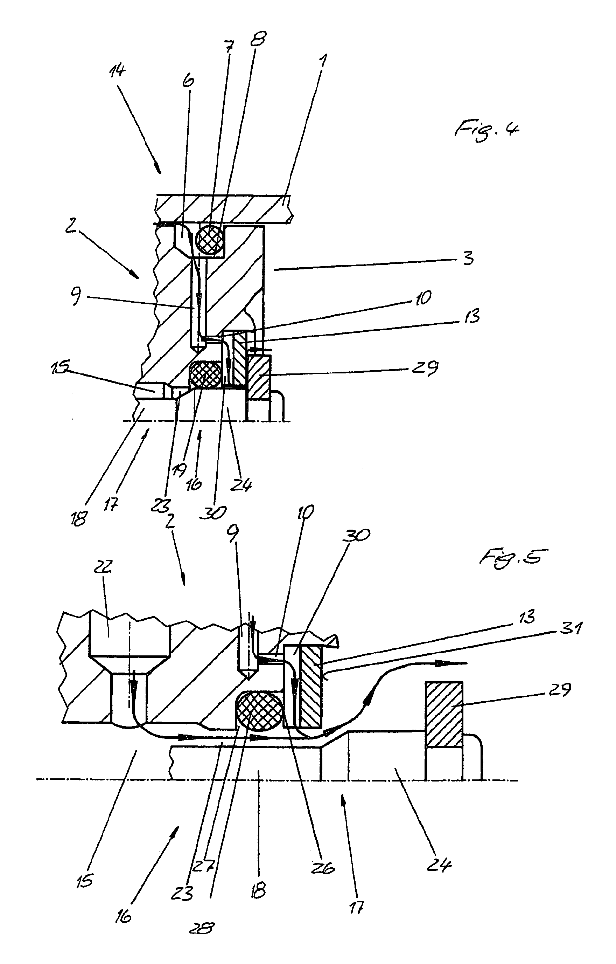

Dabei bewegt sich der Dichtring 7 zur der ersten Zylinderkammer 3 näheren Seitenwand der Nut 6 und gibt einen Durchgang von der zweiten Zylinderkammer 4 zum Verbindungskanal 9 frei (Figuren 4, 8 und 9).

Dadurch kann Gas von der zweiten Zylinderkammer 4 über den Verbindungskanal 9, das Verbindungskanalstück 10 zu den Radialnuten 30 der Ringscheibe 13 strömen.

Bei den Ausführungsbeispielen der Figuren 8 und 9 strömt das Gas durch die Ausnehmungen 35 bzw. 35' oder das Sinterbauteil gedrosselt in die erste Zylinderkammer 3 weiter.

Bei dem Ausführungsbeispiel der Figuren 1 bis 7 strömt das Gas über die Radialnuten 30 zur Ventilöffnung 23 und durch die zwischen der Ringscheibe 13 und daran anliegenden radialen Erweiterung 29 gebildete Strömungsdrossel in die erste Zylinderkammer 3 weiter.

Dieser Strömungsweg über die Strömungsdrossel führt zu einer sehr langsamen Ausschubbewegung von Kolben 2 und Kolbenstange 5.
Soll diese Ausschubbewegung bei unbelasteter Kolbenstange 2 schnell erfolgen, so wird manuell über die Betätigungsstange 21 das Verbindungsventil 16 geöffnet (Figur 5), so daß zusätzlich ein großer Strömungsquerschnitt zur Verfügung steht.

Soll bei belasteter Kolbenstange 5 eine Einschubbewegung erfolgen, so wird entsprechend Figur 7 manuell das Verbindungsventil 16 geöffnet. Damit kann ungedrosselt Gas von der ersten Zylinderkammer 3 in die zweite Zylinderkammer 4 strömen.

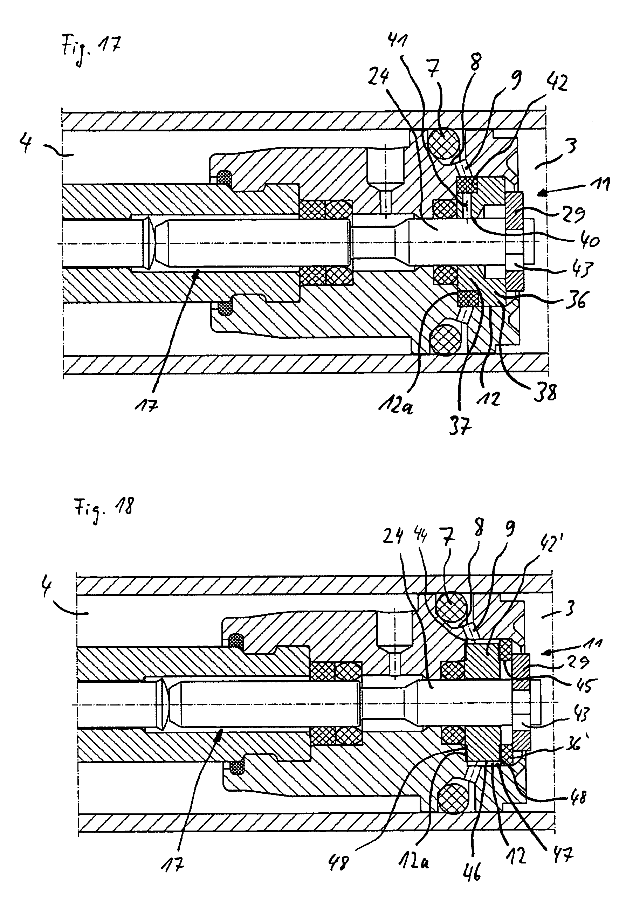

Bei dem in Figur 17 gezeigten Ausführungsbeispiel erstreckt sich der Verbindungskanal 9 im wesentlichen in radialer Richtung vom Nutgrund 8 direkt in die Topfausnehmung 11, die sich, im Vergleich zu der in Figur 1 dargestellten Topfausnehmung, tiefer in Richtung Kolbenstange 5 erstreckt. In der Topfausnehmung 11 ist eine Haltevorrichtung 36 eingesetzt, die sich an der großen Stufe 12 am Stufengrund 12a abstützt und durch Verstemmung des Mündungsbereichs der Topfausnehmung 11 im Bereich der ersten Zylinderkammer 3 in ihrer Einbauposition gehalten wird. Die Haltevorrichtung 36 kann alternativ auch durch Preßsitz in der Topfausnehmung gehalten werden. Ein am Stufengrund 12a anliegender Bereich 37 der Haltevorrichtung 36 weist einen kleineren Durchmesser auf, als ein an der Verstemmung des Mündungsbereichs anliegender Bereich 38 der Haltevorrichtung 36.

Die Haltevorrichtung 36 weist eine Bohrung 39 auf, durch die der Endbereich 24 des Ventilstifts 17 hindurchgeführt ist. Zwischen dem Endbereich 24 und der Bohrung 39 befindet sich an der Stelle, die dem Bereich 37 zugeordnet ist, ein kleiner, einen Ringraum bildenden Luftspalt 40, der sich im wesentlichen an der Stelle aufweitet, die dem Bereich 38 zugeordnet ist.

Durch den der ersten Stufe 12 näher liegenden Bereich 37 der Haltevorrichtung 36 erstreckt sich eine radiale Bohrung 41 vom Außenumfang in die Bohrung 39.

Um den Außenumfang des Bereichs 37 herum, ist eine vorzugsweise aus PU-Schaum gebildete Scheibe 42 angeordnet, die somit zwischen dem Verbindungskanal 9 und der Bohrung 41 angeordnet ist.

An dem freien Ende des Endbereichs 24 weist der Ventilstift 17 eine radiale Erweiterung 29 auf, die in der Schließstellung des Ventilstifts 17 an der Haltevorrichtung 36 axial in Anlage ist.

Die radiale Erweiterung 29 ist als Ringscheibe ausgebildet, die an dem Ventilstift 17 festgenietet ist und wenigstens eine Aussparung 43 aufweist.

Ist die Kolbenstange 5 bei geschlossenem Verbindungsventil 16 nicht in Einschubrichtung belastet, herrscht ein ausgeglichener Druck in beiden Zylinderkammern 3 und 4. Die größere Fläche der der ersten Zylinderkammer 3 zugewandten Seite des Kolbens 2 führt wieder, wie weiter vorne beschrieben, zu einer Ausschubbewegung von Kolben 2 und Kolbenstange 5.

Der Dichtring 7 bewegt sich zur der ersten Zylinderkammer 3 näheren Seitenwand der Nut 6 und gibt einen Durchgang von der zweiten Zylinderkammer 4 zum Verbindungskanal 9 frei.

Dadurch kann Gas von der zweiten Zylinderkammer 4 über den Verbindungskanal 9, durch die Scheibe 42 und die Bohrung 41, den Luftspalt 40 und die Aussparung 43 in der radialen Erweiterung 29 in die erste Zylinderkammer 3 strömen.

Der Kolben 2 des in Figur 18 gezeigten Ausführungsbeispiels weist ebenfalls einen Verbindungskanal 9 im wesentlichen in radialer Richtung vom Nutgrund 8 direkt in die Topfausnehmung 11 auf. Auch hier erstreckt sich die Topfausnehmung 11 tiefer in Richtung Kolbenstange 5 als bei dem in Figur 1 gezeigten Kolben 2. Zusätzlich weist die Topfausnehmung 11 eine weitere zweite kleine Stufe 44 auf.

In der Topfausnehmung 11 ist eine als Lochscheibe ausgebildete Haltevorrichtung 36' eingesetzt, die sich an einer vorzugsweise aus Sintermaterial gebildete Scheibe 42' abstützt, die sich wiederum am Stufengrund 12a der großen Stufe 12 abstützt. Haltevorrichtung 36' und Scheibe 42' werden durch Verstemmung des Mündungsbereichs der Topfausnehmung 11 im Bereich der ersten Zylinderkammer 3 in ihrer Einbauposition gehalten. Der Endbereich 24 des Ventilstifts 17 erstreckt sich durch die Scheibe 42' und das koaxial angeordnete Loch 45 in der Haltevorrichtung 36' hindurch.

Durch die zweite kleine Stufe 44 wird ein Ringraum 46 zwischen der Scheibe 42' und der Wand 47 der Topfausnehmung 11 gebildet. Das Loch 45 ist größer als der Außendurchmesser des Endbereichs 24 des Ventilstifts 17 und kleiner als der Außendurchmesser der als Scheibe ausgebildeten und an den Ventilstift 17 angenieteten radialen Erweiterung 29. Die als Ringscheibe ausgebildet radiale Erweiterung 29 ist am Ventilstift 17 festgenietet und weist wenigstens eine Aussparung 43 auf.

An beiden Stirnseiten der Scheibe 42' sind separate oder vorzugsweise angeformte Dichteinrichtungen 48 angeordnet, die wenigstens teilweise die Stirnseiten gasdicht abdichten, vorzugsweise in den Bereichen, wo die Scheibe 42' am Stufengrund 12a der großen Stufe 12 und an der Haltevorrichtung 36' anliegt.

Wie bei den unter Figur 17 beschriebenen Bedingungen, kann Gas von der zweiten Zylinderkammer 4 über den Verbindungskanal 9, den Ringraum 46 durch die Scheibe 42', das Loch 45 und die Aussparung 43 in der radialen Erweiterung 29 in die erste Zylinderkammer 3 strömen.

**Bezugszeichenliste**

| | | | |
|---|---|---|---|
| 1 | Zylinder | 29 | radiale Erweiterung |
| 2 | Kolben | 30 | erste Radialnuten |
| 3 | erste Zylinderkammer | 31 | Seitenwand |
| 4 | zweite Zylinderkammer | 32 | zweite Radialnut |
| 5 | Kolbenstange | 33 | Prägemuster |
| 6 | Nut | 34 | Oberflächenrauhigkeit |
| 7 | Dichtring | 34' | Oberflächenrauhigkeit |
| 8 | Nutgrund | 35 | Ausnehmung |
| 9 | Verbindungskanal | 36 | Haltevorrichtung |
| 10 | Verbindungskanalstück | 36' | Haltevorrichtung |
| 11 | Topfausnehmung | 37 | Bereich |
| 12 | große Stufe | 38 | Bereich |
| 12a | Stufengrund | 39 | Bohrung |
| 13 | Ringscheibe | 40 | Luftspalt |
| 14 | Ventil | 41 | Bohrung |
| 15 | Ventilkammer | 42 | Scheibe |
| 16 | Verbindungsventil | 42' | Scheibe |
| 17 | Ventilstift | 43 | Aussparung |
| 18 | Bereich | 44 | kleine Stufe |
| 35' | Ausnehmung | 45 | Loch |
| 19 | Dichtung | 46 | Ringraum |
| 20 | Koaxialbohrung | 47 | Wand |
| 21 | Betätigungsstange | 48 | Dichteinrichtung |
| 22 | Kanäle | | |
| 23 | Ventilöffnung | | |
| 24 | Endbereich | | |
| 25 | kleine Stufe | | |
| 26 | Nutseitenwand | | |
| 27 | Ringnut | | |
| 28 | zweiter Dichtring | | |

## Patentansprüche

1. Verstelleinrichtung zum Verstellen eines Bauteils, insbesondere einer Stuhllehne, mit einer Gasfeder, die einen Zylinder (1) aufweist, der an seinem einen Ende geschlossen ist und in dem ein Kolben (2) verschiebbar angeordnet ist, der den Zylinder (1) in eine erste (3) und eine zweite Zylinderkammer (4) unterteilt sowie einseitig eine Kolbenstange (5) aufweist, die die dem geschlossenen Ende des Zylinders (1) abgewandte zweite Zylinderkammer (4) durchragt und abgedichtet aus dem Zylinder (1) herausgeführt ist, mit einer unter Überdruck stehenden Gasfüllung der zweiten (4) und der ersten Zylinderkammer (3), durch die der Kolben (2) mit einer Ausschubkraft beaufschlagt ist, mit einem Ventil (14) in einer von der zweiten Zylinderkammer (4) zur ersten Zylinderkammer (3) führenden Verbindung, das einen Gasstrom von der zweiten (4) in die erste Zylinderkammer (3) ermöglicht und in der entgegengesetzten Strömungsrichtung sperrt sowie mit einem manuell betätigbaren Verbindungsventil (16), durch das die erste (3) und zweite Zylinderkammer (4) miteinander verbindbar sind, wobei in der von der zweiten Zylinderkammer (4) zur ersten Zylinderkammer (3) führenden, von dem Ventil (14) absperrbaren Verbindung eine Strömungsdrossel angeordnet ist, wobei die Strömungsdrossel in der Verbindung zwischen dem Ventil (14) und der ersten Zylinderkammer (3) angeordnet ist, und das Verbindungsventil (16) eine im Kolben (2) koaxial ausgebildete Ventilkammer (15) aufweist, die über einen oder mehrere Kanäle (22) mit der zweiten Zylinderkammer (4) verbunden ist und die eine koaxiale, zur ersten Zylinderkammer (3) führende Ventilöffnung (23) besitzt, die von einem Ventilglied verschließbar ist, das mittels eines die Ventilkammer (15) koaxial durchragenden, manuell betätigbaren Veritilstifts (17) koaxial in Richtung zur ersten Zylinderkammer (3) aus seiner Schließstellung in seine Öffnungsstellung bewegbar ist, **dadurch gekenntzeichnet,** daß die Verbindung zwischen VentiJ (14) und erster Zylinderkammer (3) eine radial in die Ventilöffnung (23) mündende Öffnung besitzt, die von dem Ventilglied in seiner die Ventilöffnung (23) schließenden Schließstellung ganz verschlossen oder zur ersten Zylinderkammer (3) teilgeöffnet und in seiner die Ventilöffnung (23) öffnenden Öffnungsstellung geöffnet ist.

2. Verstelleinrichtung nach Anspruch 1, **dadurch gekennzeichnet, daß** das Ventil (14) eine an der radial umlaufenden Mantelfläche des Kolbens (2) ausgebildete und mit der ersten Zylinderkammer (3) verbundene, radial umlaufende Nut (6) aufweist, in der ein Dichtring (7) geringerer axialer Erstreckung als der Nut (6) zwischen einer der der ersten Zylinderkammer (3) näheren ersten Nutseitenwand und einer der zweiten Zylinderkammer (4) näheren zweiten Nutseitenwand axial bewegbar angeordnet ist, der mit seinem Außenumfang dichtend an der Innenwand des Zylinders (1) in Anlage ist, wobei im Kolben (2) ein von der Nut (6) zur ersten Zylinderkammer (3) führender die Strömungsdrossel aufweisender Verbindungskahal (9) angeordnet ist und die teilgeöffnete in die Ventilöffnung mündende Öffnung des Verbindungskanals die Strömungsdrossel bildet.

3. Verstelleinrichtung nach Anspruch 1, **Dadurch gekennzeichnet, daß** in der zylindrischen Wand der Verbindungsöffnung (23) eine radial umlaufende Ringnut (27) angeordnet ist, in der ein Dichtring (28) eingesetzt ist, wobei der Ventilstift (17) im Bereich der Ventilkammer (15) einen gegenüber der Ventilkammer (15) reduzierten Durchmesser aufweist und an seinem in die Ventilöffnung (23) ragenden Bereich einen etwa dem Innendurchmesser des Dichtrings (28) entsprechenden Durchmesser aufweist, an dem in der Schließstellung des Ventilstifts (17) der Dichtring (28) einen Ventildurchgang absperrend in Anlage ist und wobei in der Öffnungsstellung des Ventilstifts (17) sich der Bereich (18) reduzierten Durchmessers im Bereich des Dichtrings (28) befindet.

4. Verstelleinrichtung nach Anspruch 3, **dadurch gekennzeichnet, daß** eine in dem Kolben (2) koaxial fest angeordnete Ringscheibe (13) die Nutseitenwand (26) auf der der Ventilkammer (15) abgewandten Seite der Ringnut (27) bildet, wobei in oder an der Ringscheibe (13) die Strömungsdrossel angeordnet ist.

5. Verstelleinrichtung nach Anspruch 4, **dadurch gekennzeichnet, daß** in der Ringscheibe (13) ein axial durchgehender Axialdurchlaß mit einem Drosselquerschnitt ausgebildet ist.

6. Verstelleinrichtung nach Anspruch 5, **dadurch gekennzeichnet, daß** der Axialdurchlaß eine axial durchgehende Ausnehmung (35, 35') ist.

7. Verstelleinrichtung nach Anspruch 6, **dadurch gekennzeichnet, daß** in dem Axialdurchlaß ein poröses Bauteil angeordnet ist.

8. Verstelleinrichtung nach den Ansprüchen 4 und 5, **dadurrch**
**gekennzeichnet,** daß die Ringscheibe (13) ein poröses Bauteil ist.

9. Verstelleinrichtung nach einem der Ansprüche 6 und 7, **dadurch**
**gekennzeichnet, daß** das poröse Bauteil ein Sinterbauteil ist.

10. Verstelleinrichtung nach einem der Ansprüche 6 und 7, **dadurch**
**gekennzeichnet, daß** das poröse Bauteil ein PU-Schaumbauteil ist.

11. Verstelleinrichtung nach Anspruch 4, **dadurch gekennzeichnet, daß** in
oder an der Ringscheibe (13) eine oder mehrere zumindest einen Teil des Verbindungskanals (9) bildende Radialverbindungen ausgebildet sind, die radial in die Ventilöffnung (23) münden.

12. Verstelleinrichtung nach Anspruch 11, **dadurch gekennzeichnet, daß** die Radialverbindungen Radialnuten (30) sind, die an ihrer dem Dichtring (28) zugewandten Seite offen sind.

13. Verstelleinrichtung nach einem der Ansprüche 11 und 12, **dadurch**
**gekennzeichnet, daß** die ersten Radialverbindungen die Strömungsdrossel bilden.

14. Verstelleinrichtung nach den Ansprüchen 3 und 11, **dadurch**
**gekennzeichnet, daß** der Ventilstift (17) an seinem der ersten Zylinderkammer (3) zugewandten Endbereich (24) eine radiale Erweiterung (29) aufweist, die in der Schließstellung des Ventilstifts (17) an der Ringscheibe (13) axial in Anlage ist, wobei bei axial an der Ringscheibe (13) anliegender radialer Erweiterung (29) zwischen der radialen Erweiterung (29) des Ventilstifts (17) und der der ersten Zylinderkammer (3) zugewandten Seitenwand (31) der Ringscheibe (13) die Strömungsdrossel gebildet ist.

15. Verstelleinrichtung nach Anspruch 14, **dadurch gekennzeichnet, daß** an der der ersten Zylinderkammer (3) zugewandten Seitenwand (31) der Ringscheibe (13) und/oder an der der Ringscheibe zugewandten Seite der radialen Erweiterung eine oder mehrere die Strömungsdrossel bildende zweite Radialverbindungen ausgebildet sind.

16. Verstelleinrichtung nach Anspruch 15, **dadurch gekennzeichnet, daß** die zweiten Radialverbindungen zweite Radialnuten (32) sind, die an ihrer der ersten Zylinderkammer (3) zugewandten Seite offen sind.

17. Verstelleinrichtung nach Anspruch 15, **dadurch gekennzeichnet, daß** die zweiten Radialverbindungen durch Oberflächenrauhigkeit (34, 34') auf der der ersten Zylinderkammer zugewandten Seite der Ringscheibe (13) gebildet sind.

18. Verstelleinrichtung nach Anspruch 15, **dadurch gekennzeichnet, daß** die zweiten Radialverbindungen durch ein auf der der ersten Zylinderkammer (3) zugewandten Seite der Ringscheibe (13) ausgebildetes Prägemuster (33) gebildet sind.

19. Verstelleinrichtung nach einem der Ansprüche 1 und 2, **dadurch**
**gekennzeichnet, daß** der Kolben (2) eine Topfausnehmung (11) aufweist, in der eine Haltevorrichtung (36,36') eingesetzt ist, die eine Scheibe (42,42') in ihrer Einbauposition hält.

20. Verstelleinrichtung nach Anspruch 19, **dadurch gekennzeichnet, daß** die Scheibe (42,42') die Strömungsdrossel bildet.

21. Verstelleinrichtung nach Anspruch 20, **dadurch gekennzeichnet, daß** die Haltevorrichtung (36) eine axiale Bohrung (39), einen Bereich (37) mit geringerem Außendurchmesser und einen Bereich (38) mit größerem Außendurchmesser aufweist, wobei sich durch den Bereich (37) eine radiale Bohrung (41) vom Außenumfang der Haltevorrichtung (36) zur Bohrung (39) erstreckt.

22. Verstelleinrichtung nach Anspruch 20, **dadurch gekennzeichnet, daß** an beiden Stirnseiten der Scheibe (42') separate oder angeformte Dichteinrichtungen (48) angeordnet sind.

23. Verstelleinrichtung nach Anspruch 22, **Dadurch gekennzeichnet, daß**, die Dichteinrichtungen (48) wenigstens teilweise die Stirnseiten der Scheibe (42') gasdicht abdichten, vorzugsweise in den Bereichen, wo die Scheibe 42' am Stufengrund 12a der großen Stufe 12 und an der Haltevorrichtung 36' anliegt.

24. Verstelleinrichtung nach Anspruch 23, **dadurch gekennzeichnet, daß**, die Dichteinrichtungen (48) die Stirnseiten der Scheibe (42') in den Bereichen gasdicht abdichten, wo die Scheibe 42' in der Topfausnehmung 11 am Stufengrund 12a der großen Stufe 12 und an der Haltevorrichtung 36' anliegt.

## Claims

1. Adjusting apparatus for adjusting a component, in particular a chair back, having a gas spring, which has a cylinder (1), which is closed at its one end and in which is arranged in a displaceable manner a piston (2), which subdivides the cylinder (1) into a first (3) and a second (4) cylinder chamber and, at one end, has a piston rod (5), which projects through the second cylinder chamber (4), directed away from the closed end of the cylinder (1), and is guided in a sealed manner out of the cylinder (1), having a gas filling in the second (4) and the first (3) cylinder chambers, the gas filling being subjected to positive pressure and acting on the piston (2) with a pushing-out force, having a valve (14), which is located in a connection leading from the second cylinder chamber (4) to the first cylinder chamber (3), enables a gas stream from the second (4) into the first (3) cylinder chamber and blocks the same in the opposite flow direction, and having a manually actuable connecting valve (16), by means of which the first (3) and second (4) cylinder chambers can be connected to one another, wherein a flow restrictor is arranged in the connection which can be blocked off by the valve (14), and leads from the second cylinder chamber (4) to the first cylinder chamber (3), wherein the flow restrictor is arranged in the connection between the valve (14) and the first cylinder chamber (3), and the connecting valve (16) has a valve chamber (15) which is formed coxially in the piston (2), is connected to the second cylinder chamber (4) via one or more channels (22) and has a coaxial valve opening (23), which leads to the first cylinder chamber (3) and can be closed by a valve member which, by means of a manually actuable valve pin (17) projecting coaxially through the valve chamber (15), can be moved coaxially, in the direction of the first cylinder chamber (3), from its closed position into its open position, **characterized in that** the connection between the valve (14) and first cylinder chamber (3) has an opening which opens out radially into the valve opening (23) and is completely closed by the valve member in the closed position of the latter, in which the valve opening (23) is closed, or is partially opened in relation to the first cylinder chamber (3) by the valve member and is opened by the valve member in the open position of the latter, in which the valve opening (23) is open.

2. Adjusting apparatus according to Claim 1, **characterized in that** the valve (14) has a radially encircling groove (6) which is formed on the radially encircling lateral surface of the piston (2), is connected to the first cylinder chamber (3) and in which a sealing ring (7) of smaller axial extent than the groove (6) is arranged such that it can be moved axially between a first groove side wall, which is closer to the first cylinder chamber (3), and a second groove side wall, which is closer to the second cylinder chamber (4), said sealing ring having its outer circumference butting with sealing action against the inner wall of the cylinder (1), wherein the piston (2) has arranged in it a connecting channel (9), which leads from the groove (6) to the first cylinder chamber (3) and has the flow restrictor, and the partially open connecting-channel opening, which opens out into the valve opening, forms the flow restrictor.

3. Adjusting apparatus according to Claim 1, **characterized in that** the cylindrical wall of the connecting opening (23) has arranged in it a radially encircling annular groove (27), in which a sealing ring (28) is inserted, wherein the valve pin (17), in the region of the valve chamber (15), has a diameter which is reduced in relation to the valve chamber (15) and, in its region which projects into the valve opening (23), has a diameter which corresponds approximately to the internal diameter of the sealing ring (28) and against which, in the closed position of the valve pin (17), the sealing ring (28) butts to block off a valve passage, and wherein, in the open position of the valve pin (17), the region (18) of reduced diameter is located in the region of the sealing ring (28).

4. Adjusting apparatus according to Claim 3, **characterized in that** an annular disc (13) fixed coaxially in the piston (2) forms the groove side wall (26) on that side of the annular groove (27) which is directed away from the valve chamber (15), wherein the flow restrictor is arranged in or on the annular disc (13).

5. Adjusting apparatus according to Claim 4, **characterized in that** an axially through-going axial through-passage with a restricting cross section is formed in the annular disc (13).

6. Adjusting apparatus according to Claim 5, **characterized in that** the axial through-passage is an axially through-going aperture (35, 35').

7. Adjusting apparatus according to Claim 6, **characterized in that** a porous component is arranged in the axial through-passage.

8. Adjusting apparatus according to Claims 4 and 5, **characterized in that** the annular disc (13) is a porous component.

9. Adjusting apparatus according to either of Claims 6 and 7, **characterized in that** the porous component is a sintered component.

10. Adjusting apparatus according to either of Claims 6 and 7, **characterized in that** the porous component is a PU-foam component.

11. Adjusting apparatus according to Claim 4, **characterized in that** the annular disc (13) has formed in or on it one or more radial connections which form at least part of the connecting channel (9) and open out radially into the valve opening (23).

12. Adjusting apparatus according to Claim 11, **characterized in that** the radial connections are radial grooves (30), which are open on their side directed towards the sealing ring (28).

13. Adjusting apparatus according to either of Claims 11 and 12, **characterized in that** the first radial connections form the flow restrictor.

14. Adjusting apparatus according to Claims 3 and 11, **characterized in that**, at its end region (24), which is directed towards the first cylinder chamber (3), the valve pin (17) has a radial widening (29) which, in the closed position of the valve pin (17), butts axially against the annular disc (13), wherein, with the radial widening (29) butting axially against the annular disc (13), the flow restrictor is formed between the radial widening (29) of the valve pin (17) and the side wall (31) of the annular disc (13), said side wall being directed towards the first cylinder chamber (3).

15. Adjusting apparatus according to Claim 14, **characterized in that** one or more second radial connections which form the flow restrictor are formed on the side wall (31) of the annular disc (13), said side wall being directed towards the first cylinder chamber (3), and/or on that side of the radial widening which is directed towards the annular disc.

16. Adjusting apparatus according to Claim 15, **characterized in that** the second radial connections are second radial grooves (32), which are open on their side directed towards the first cylinder chamber (3).

17. Adjusting apparatus according to Claim 15, **characterized in that** the second radial connections are formed by surface roughness (34, 34') on that side of the annular disc (13) which is directed towards the first cylinder chamber.

18. Adjusting apparatus according to Claim 15, **characterized in that** the second radial connections are formed by an embossed pattern (33) formed on that side of the annular disc (13) which is directed towards the first cylinder chamber (3).

19. Adjusting apparatus according to either of Claims 1 and 2, **characterized in that** the piston (2) has a cup recess (11), in which is inserted a retaining device (36, 36'), which retains a disc (42, 42') in its installed position.

20. Adjusting apparatus according to Claim 19, **characterized in that** the disc (42, 42') forms the flow restrictor.

21. Adjusting apparatus according to Claim 20, **characterized in that** the retaining device (36) has an axial bore (39), a region (37) of relatively small external diameter and a region (38) of relatively large external diameter, wherein a radial bore (41) extends through the region (37) from the outer circumference of the retaining device (36) to the bore (39).

22. Adjusting apparatus according to Claim 20, **characterized in that** separate or formed-on sealing means (48) are arranged on the two end sides of the disc (42').

23. Adjusting apparatus according to Claim 22, **characterized in that** the sealing means (48) seal, at least in part, the end sides of the disc (42') in a gas-tight manner, preferably in the regions where the disc (42') butts against the floor (12a) of the large step (12) and against the retaining device (36').

24. Adjusting apparatus according to Claim 23, **characterized in that** the sealing means (48) seal the end sides of the disc (42') in a gas-tight manner in the regions where the disc (42') butts in the cup recess (11), against the floor (12a) of the large step (12) and against the retaining device (36').

## Revendications

1. Dispositif de réglage pour régler un composant, notamment un dossier de siège, portant un ressort à gaz, qui présente un cylindre (1), qui est fermé à une de ses extrémités et dans lequel un piston (2) est disposé de manière coulissante, qui divise le cylindre (1) en une première (3) et une deuxième chambre du cylindre (4) ainsi que présente d'un côté une tige de piston (5), qui dépasse à l'intérieur de la deuxième chambre de cylindre (4) se détournant de l'extrémité fermée du cylindre (1) et est fait sortir du cylindre (1) de manière étanche, comportant un remplissage de gaz exposé à une surpression de la deuxième (4) et la première chambre de cylindre (3) par l'intermédiaire duquel le piston (2) est sollicité avec un effort de tarage, comportant une soupape (14) dans une liaison menant de la deuxième chambre de cylindre (4) à la première chambre de cylindre (3), qui permet un écoulement de gaz de la deuxième (4) à la première chambre de cylindre (3) et bloque dans la direction d'écoulement opposée, ainsi qu'une soupape de liaison actionnable manuellement (16), par l'intermédiaire de laquelle la première (3) et la deuxième (4) chambre de cylindre peuvent être reliées l'une à l'autre, dans lequel dans la liaison pouvant être bloquée par la soupape (14), menant de la deuxième chambre de cylindre (4) à la première chambre de cylindre (3) un étranglement d'écoulement est disposé, dans lequel l'étranglement de liaison est disposé dans la liaison entre la soupape (14) et la première chambre de cylindre (3), et la soupape de liaison (16) présente une chambre de soupape (15) réalisée coaxialement dans le piston (2), qui est reliée par l'intermédiaire d'un ou plusieurs canaux (22) avec la deuxième chambre de cylindre (4) et qui possède une ouverture de soupape (23) coaxiale, menant à la première chambre de cylindre (3), qui peut être obturée par un organe de soupape, qui peut être déplacé de sa position de fermeture à sa position d'ouverture au moyen d'une tige de soupape (17) actionnable manuellement, dépassant coaxialement à l'intérieur de la chambre de soupape (15) coaxialement dans la direction de la première chambre de cylindre (3), **caractérisé en ce que** la liaison entre la soupape (14) et la première chambre de cylindre (3) possède une ouverture débouchant dans l'ouverture de soupape (23), qui est totalement fermée par l'organe de soupape dans sa position de fermeture obturant l'ouverture de soupape (23) ou partiellement ouverte par rapport à la première chambre de cylindre (3) et est ouverte dans sa position d'ouverture ouvrant l'ouverture de soupape (23).

2. Dispositif de réglage selon la revendication 1, **caractérisé en ce que** la soupape (14) présente une rainure circonférentielle radiale (6), qui est formée sur la surface de gaine du piston (2) circonférentielle radialement et reliée à la première chambre de cylindre (3), dans laquelle un joint d'étanchéité (7) d'extension axiale moindre que la rainure (6) est disposé de manière déplaçable entre une première paroi latérale de rainure plus proche de la première chambre de cylindre (3) et une deuxième paroi latérale de rainure plus proche de la deuxième chambre de cylindre (4), qui vient reposer par sa circonférence externe de manière étanche sur la paroi intérieure du cylindre (1), dans lequel dans le piston (2) un canal de liaison (9) présentant l'étranglement d'écoulement menant de la rainure (6) à la première chambre de cylindre (3) est disposé et l'ouverture du canal de liaison partiellement ouverte et débouchant dans l'ouverture de soupape forme l'étranglement d'écoulement.

3. Dispositif de réglage selon la revendication 1, **caractérisé en ce que** dans la paroi cylindrique de l'ouverture de liaison (23) une rainure annulaire circonférentielle radiale (27) est disposée, dans laquelle une bague d'étanchéité (28) est insérée, dans lequel la tige de soupape (17) au niveau de la chambre de soupape (15) présente un diamètre réduit par rapport à la chambre de soupape (15) et présente sur sa zone saillant à l'intérieur de l'ouverture de soupape (23) un diamètre correspondant environ au diamètre interne de la bague d'étanchéité (28), sur lequel dans la position de fermeture de la tige de soupape (17) la bague d'étanchéité (28) vient reposer de manière à bloquer un passage de soupape et dans lequel dans la position d'ouverture de la tige de soupape (17) la zone (18) au diamètre réduit se trouve dans la zone de la bague d'étanchéité (28).

4. Dispositif de réglage selon la revendication 3, **caractérisé en ce qu'**un disque annulaire (13) disposé fixement coaxialement dans le piston (2) forme la paroi latérale de rainure (26) sur le côté de la rainure annulaire (27) se détournant de la chambre de soupape (15), dans lequel l'étranglement d'écoulement est disposé dans ou sur le disque annulaire (13).

5. Dispositif de réglage selon la revendication 4, **caractérisé en ce que** dans le disque annulaire (13) est réalisé un passage axial continu avec une section transversale d'étranglement.

6. Dispositif de réglage selon la revendication 5, **caractérisé en ce que** le passage axial est un évidement (35, 35') axial continu.

7. Dispositif de réglage selon la revendication 6, **caractérisé en ce qu'**un composant poreux est disposé dans le passage axial.

8. Dispositif de réglage selon les revendications 4 et 5, **caractérisé en ce que** le disque annulaire (13) est un composant poreux.

9. Dispositif de réglage selon une des revendications 6 et 7, **caractérisé en ce que** le composant poreux est un composant fritté.

10. Dispositif de réglage selon une des revendications 6 et 7, **caractérisé en ce que** le composant poreux est un composant en mousse de PU.

11. Dispositif de réglage selon la revendication 4, **caractérisé en ce que** dans ou sur le disque annulaire (13) une ou plusieurs liaisons radiales formant au moins une partie du canal de liaison (9) sont réalisées, qui débouchent radialement dans l'ouverture de soupape (23).

12. Dispositif de réglage selon la revendication 11, **caractérisé en ce que** les liaisons radiales sont des rainures radiales (30), qui sont ouvertes sur leur extrémité tournée vers la bague d'étanchéité (28).

13. Dispositif de réglage selon une des revendications 11 et 12, **caractérisé en ce que** les premières liaisons radiales forment l'étranglement d'écoulement.

14. Dispositif de réglage selon les revendications 3 et 11, **caractérisé en ce que** la tige de soupape (17) sur sa zone d'extrémité (24) tournée vers la première chambre de cylindre (3) présente un élargissement radial (29), qui dans la position de fermeture de la tige de soupape (17) vient reposer axialement sur le disque annulaire (13), dans lequel quand l'élargissement radial (29) vient reposer axialement sur le disque annulaire (13) entre l'élargissement radial (29) de la tige de soupape (17) et le côté latéral (31) tourné vers la première chambre de cylindre (3) du disque annulaire (13), l'étranglement d'écoulement est formé.

15. Dispositif de réglage selon la revendication 14, **caractérisé en ce que** sur le côté latéral (31) du disque annulaire tourné vers la première chambre de cylindre (3) et/ou sur le côté tourné vers le disque annulaire (13) de l'élargissement radial une ou plusieurs deuxièmes liaisons radiales formant l'étranglement d'écoulement sont réalisées.

16. Dispositif de réglage selon la revendication 15, **caractérisé en ce que** les deuxièmes liaisons radiales sont des deuxièmes rainures radiales (32), qui sont ouvertes sur leur côté tourné vers la première chambre de cylindre (3).

17. Dispositif de réglage selon la revendication 15, **caractérisé en ce que** les deuxièmes liaisons radiales sont formées par la rugosité de surface (34, 34') sur le côté du disque annulaire (13) tourné vers la première chambre de cylindre.

18. Dispositif de réglage selon la revendication 15, **caractérisé en ce que** les deuxièmes liaisons radiales sont formées par un motif gaufré (33) réalisé sur le côté du disque annulaire (13) tourné vers la première chambre de cylindre (3).

19. Dispositif de réglage selon une des revendications 1 et 2, **caractérisé en ce que** le piston (2) présente un évidement de pot (11), dans lequel un dispositif de retenue (36, 36') est inséré, qui maintient un disque (42, 42') dans sa position de montage.

20. Dispositif de réglage selon la revendication 19, **caractérisé en ce que** le disque (42,42') forme l'étranglement d'écoulement.

21. Dispositif de réglage selon la revendication 20, **caractérisé en ce que** le dispositif de retenue (36) présente un alésage axial (39), une zone (37) avec un diamètre externe réduit et une zone (38) avec un diamètre externe plus grand, dans lequel un alésage radial (41) à travers la zone (37) allant de la circonférence externe du dispositif de retenue (36) vers l'alésage (39).

22. Dispositif de réglage selon la revendication 20, **caractérisé en ce que** sur les deux côtés frontaux du disque (42') des dispositifs d'étanchéité (48) séparés ou façonnés sont disposés.

23. Dispositif de réglage selon la revendication 22, **caractérisé en ce que** les dispositifs d'étanchéité (48) isolent de manière étanche au gaz au moins partiellement les côtés frontaux du disque (42'), de préférence dans les zones où le disque 42' vient reposer sur la base de gradin 12a du grand gradin 12 et sur le dispositif de retenue 36'.

24. Dispositif de réglage selon la revendication 23, **caractérisé en ce que** les dispositifs d'étanchéité (48) isolent de manière étanche au gaz les côtés frontaux du disque (42') dans les zones où le disque 42' vient reposer dans l'évidement de pot 11 sur la base de gradin 12a du grand gradin et sur le dispositif de retenue 36'.
